# EUROPÄISCHE PATENTSCHRIFT

(11) **EP 1 199 246 B1**
(45) Veröffentlichungstag und Bekanntmachung des Hinweises auf die Patenterteilung: **15.02.2006**
(21) Anmeldenummer: 01119408.1
(22) Anmeldetag: 11.08.2001
(51) Int. Cl.: B62D 25/06, B60R 9/04

(54) **Fahrzeugdach**
Vehicle roof
Toit de véhicule

(30) Priorität: 17.10.2000 DE 10051512
(43) Veröffentlichungstag der Anmeldung: 24.04.2002
(73) Patentinhaber: JAC Products Deutschland GmbH, 42285 Wuppertal (DE)
(72) Erfinder: Lumpe, Karl-Heinz, 45549 Sprockhövel (DE); Kolodziej, Klaus, 42329 Wuppertal (DE)
(74) Vertreter: Rehders, Jochen

(56) Entgegenhaltungen:
- WO-A-99/16659
- WO-A-99/65759
- DE-A- 3 429 880
- DE-A- 19 709 016
- DE-C- 4 344 604
- DE-U- 7 929 367
- DE-U- 29 804 777
- FR-A- 1 423 471
- FR-A- 2 632 595

## Beschreibung

Die Erfindung bezieht sich auf ein Fahrzeugdach für Personen-, Kombi- u. dgl. Kraftfahrzeuge nach dem Oberbegriff des Anspruchs 1.

In der Automobilindustrie wird zunehmend die konventionelle Bauweise von Kraftfahrzeugen durch den Einsatz von Modulen verändert. So werden bereits Fahrzeugtüren, Instrumententafeln oder auch Fahrzeugklappen in Modulbauweise gefertigt.

Aus der WO 9 965 759 A ist ein Fahrzeugdach bekannt, das aus einem vorgefertigten, zumindest ein Dachaußenblech und einen Dachhimmel umfassenden Dachmodul besteht, das an den Karosserieseitenstrukturen des Fahrzeug befestigbar ist. Dieses Dachmodul kann auch Dachrelings aufweisen.

Ein Dachmodul mit integrierter Dachreling ist auch aus der DE 34 29 880 A bekannt. Aus der DE 298 04 777 U ist ein Fahrzeugdach mit einer Dachreling bekannt, deren abgebogenes Ende eine Öffnung im Dach durchsetzt.

Der Erfindung liegt die Aufgabe zugrunde, ein weiteres modulares Fahrzeugbauteil zu schaffen, das die Herstellung eines Kraftfahrzeugs vereinfachen soll.

Gemäß der Erfindung wird zur Lösung dieser Aufgabe ein Fahrzeugdach für Personen-, Kombi- und dgl. Kraftfahrzeuge, aus einem vorgefertigten, zumindest ein Dächaußenblech und einen Dachhimmel umfassenden Dächmodul mit daran befestigten Dachrelings, wobei das Dachmodul zusammen mit den darin angeordneten Dachrelings an den Karosserieseitenstrukturen eines Kraftfahrzeugs befestigbar ist, vorgeschlagen, das erfindungsgemäß dadurch gekennzeichnet ist, dass sich die Dachrelings an den Längsseitenbereichen des Moduls in etwa paralleler Ausrichtung zueinander oberhalb des Dachaußenblechs erstrecken und mit verlängerten Endbereichen, die abgewinkelt oder abgebogen sind, Öffnungen im Dachmodul durchsetzen und die einerseits jeweils an vorderen Karosseriesäulen, z.B. A-Säulen, und andererseits an hinteren Karosseriesäulen, z.B. D-Säulen, befestigbar sind.

Der besondere Vorteil der Erfindung wird in der Einbindung der Dachrelings in ein modulares Fahrzeugdachkonzept gesehen. Ein weiterer Vorteil dieser Maßnahmen besteht darin, dass jede Dachreling in ihrer Gesamtheit zu einem tragenden Teil (Strukturteil) eines Kraftfahrzeugs wird, welches die Fahrzeugstruktur von z.B. der A-Säule zur C- bzw. D-Säule verstärkt. Die auf die Dachreling im Fahrbetrieb einwirkenden Kräfte werden damit direkt in den Fahrzeugrahmen eingeleitet und nicht mehr, wie beim Stand der Technik über das Fahrzeugdach in die Seitenwände und in den Fahrzeugrahmen. Zusätzliche bzw. aufwendige Verstärkungen im Dachrahmen, wie bei den derzeitigen Fahrzeugen erforderlich, können teilweise oder sogar gänzlich entfallen. Ein weiterer Vorteil besteht darin, dass die Dachrelings bei einem Unfall mit Überschlag die dabei auftretenden Kräfte aufnehmen können, so dass sie in ihrer Wirkung einen einem Überrollbügel ähnlichen Charakter aufweisen. Im sichtbaren Bereich (außerhalb der Fahrzeugstruktur) können die Dachrelings hinsichtlich Design, Oberflächenfinish und Funktion den gleichen Charakter wie herkömmliche Dachrelings haben.

Eine weitere Ausgestaltung der Erfindung sieht vor, dass am Dachmodul Dachrelings angeordnet sind, die jeweils zumindest eine Mittelstütze aufweisen. Unter den Mittelstützen können im Dachmodul zusätzliche Verstärkungen vorgesehen werden, die dann am Dachrahmen oder den B- bzw. C-Säulen einer Kraftfahrzeugkarosserie befestigt werden. Hieraus ergibt sich eine weitere Aussteifung der Karosserie und eine noch günstigere Einleitung der auf die Dachrelings im Fahrbetrieb einwirkenden Kräfte in den Fahrzeugrahmen.

Die Dachrelings sind dabei vorteilhafterweise am Dachmodul befestigt, und zwar durch eine durch Kleben, Löten, Schweißen, Schrauben, Nieten gebildete Befestigungsanordnung. Dies hat den Vorteil, dass aufwendige Konstruktionen für den Toleranzausgleich zwischen Dachhaut und Aufriahme im Fahrzeugdach entfallen können.

Ein Ausführungsbeispiel der Erfindung wird nachfolgend anhand der Zeichnungen näher erläutert, und es zeigen:
- Fig. 1: die Ansicht eines Dach- und Seitenwandbereichs eines Kraftfahrzeugs mit einer auf dem Dach angeordneten Dachreling,
- Fig. 2: eine auf einem Fahrzeugdach angeordnete Dachreling mit einer Mittelstütze,
- Fig. 3: den vorderen Bereich eines Dachmoduls mit einer Dachreling und
- Fig. 4: den hinteren Bereich des Dachmoduls mit Dachreling nach Fig. 3.

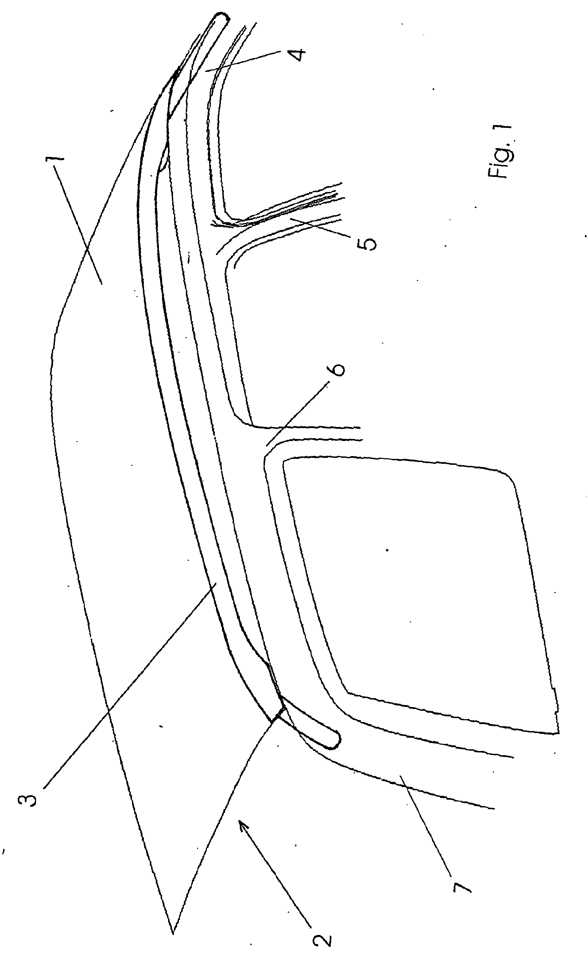

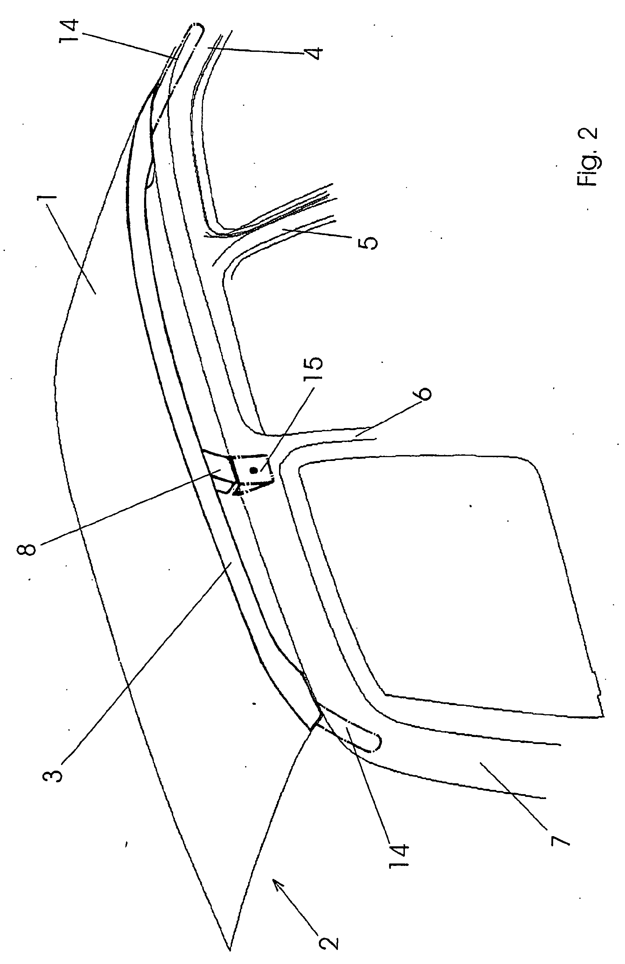

Fig. 1 und 2 lassen eine auf einem Dach eines Kraftfahrzeugs 2 angeordnete Dachreling 3 und einen Seitenwandbereich des Kraftfahrzeugs 2 mit einer A-Säule 4, einer B-Säule 5, einer C-Säule 6 und einer D-Säule 7 erkennen. Die Dachreling 3 kann einen mehrteiligen Aufbau aufweisen, besteht aber bevorzugt aus einem Stück. Die Dachreling 3 nach Fig. 2 unterscheidet sich von der nach Fig. 1 lediglich dadurch, daß sie mit einer Mittelstütze 8 versehen ist.

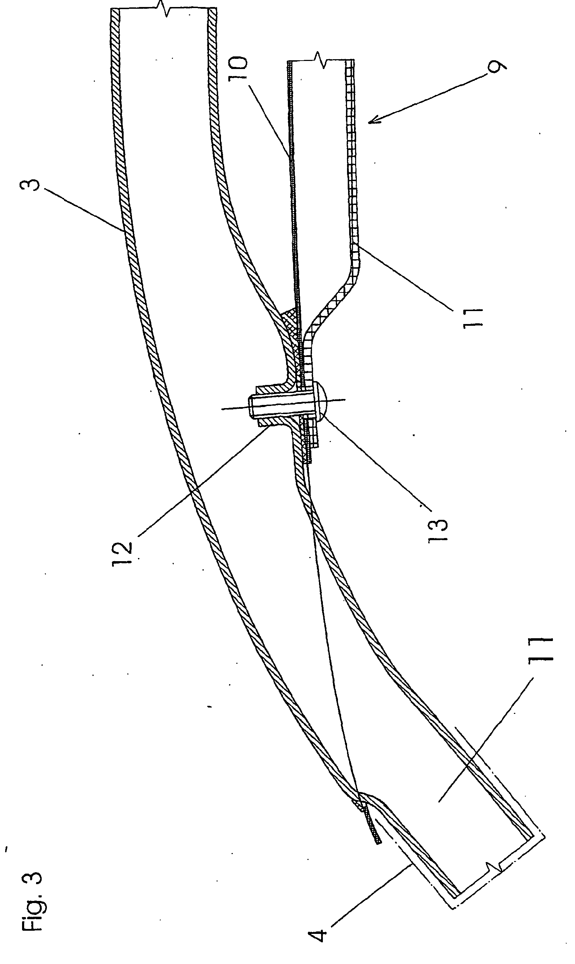

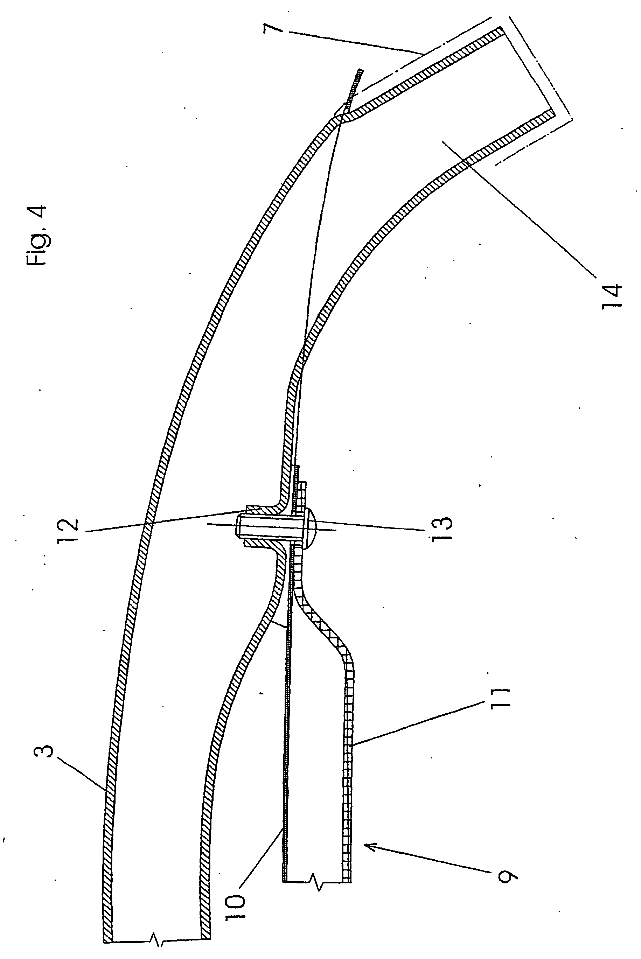

Das Dach 1 nach Fig. 1 und 2 besteht aus einem Dachmodul 9 wie es in Fig. 3 und 4 gezeigt ist, wobei das Dachmodul 9 die Besonderheit integrierter Dachrelings 3 aufweist, von denen in den Zeichnungen der Einfachheit halber nur eines gezeigt ist. Das Dachmodul 9 besteht zumindest aus einem Dachaußenblech 10 und einem Dachhimmel 11. Das Dachmodul 9 kann in hier nicht näher dargestellter Weise mit einem Schiebe-, Falt- oder Sonnendach ausgerüstet sein und auch mit den unterschiedlichsten Komponenten. Bei der vorliegenden Erfindung geht es aber in erster Linie darum, Dachrelings in ein Dachmodul zu integrieren um eine aus einem Dachmodul und zwei Dachrelings bestehende Baueinheit zu schaffen.

Wie in Fig. 3 und 4 gezeigt, ist die Dachreling 3 im vorderen und hinteren, nach unten abfallenden Bereich am Dachmodul 9 befestigt. Im dargestellten Ausführungsbeispiel weist die Dachreling 3 an den Endbereichen Gewindeeinzüge 12 auf und die Befestigung erfolgt über Schrauben 13. Es kann aber auch eine durch Kleben, Löten, Schweißen od. dgl. gebildete Befestigungsanordnung vorgesehen werden. In Fig. 3 und 4 ist weiterhin gezeigt, daß die Dachreling 3 mit verlängerten Endbereichen 14 ausgebildet ist und daß diese Endbereiche 14 das Dachmodul 9 durchsetzen, wozu das Dachmodul 9 mit entsprechenden Durchlaßöffnungen versehen ist.

Die aus Dachmodul 9 und Dachrelings 3 bestehende Baueinheit kann in herkömmlicherweise auf den Fahrzeugrahmen bzw. auf die Fahrzeugsäulen aufgesetzt und mit diesen z.B. durch Schweißen verbunden werden, wobei allerdings eine erfindungsgemäße Besonderheit zu beachten ist, die darin besteht, daß die Endbereiche 14 der Dachrelings 3 so ausgeführt sind, daß sie an Fahrzeugsäulen wie A-Säulen 4 und D-Säulen 7 befestigt werden können. Im Ausführungsbeispiel nach Fig. 3 und 4 sind z.B. die Endbereiche 14 der Dachreling 3 als Steckzapfen ausgebildet, von denen der eine in die strichpunktiert angedeutete A-Säule 4 und der andere in die strichpunktiert angedeutete D-Säule 7 eingreift. Die Befestigung der Endbereiche 14 an den A-Säulen 4 bzw. D-Säulen 7 kann wiederum jeweils durch eine Klebe-, Löt-, Schweiß-, Schraub- od. dgl. Verbindung erfolgen.

Unter den Mittelstützen 8 können im Dachmodul 9 zusätzliche Verstärkungen (in Fig. 2 ist eine Verstärkung 15 angedeutet) vorgesehen werden, die dann am Dachrahmen oder an den B-Säulen 5 bzw. C-Säulen 6 zu befestigen sind.

Jede Dachreling kann aus einem Holm und daran angesetzten End- und Stützfüßen bestehen. Bevorzugt ist jedoch eine Dachreling, die sich dadurch auszeichnet, daß sie aus dem Abschnitt eines Metallrohrs besteht und einstückig und materialeinheitlich mit den Endstützen bzw. Verlängerungen 14 und ggf. mit einer Mittelstütze 8 ausgebildet ist, wobei die Herstellung der Dachreling 3 unter Anwendung eines Innenhochdruck nutzenden Formgebungsverfahrens erfolgt.

## Patentansprüche

1. Fahrzeugdach für Persorien-, Kombi- u. dgl. Kraftfahrzeuge, aus einem vorgefertigten, zumindest ein Dachaußenblech (10) und einen Dachhimmel (11) umfassenden Dachmodul (9) mit daran befestigten Dachrelings (2), wobei das Dachmodul (9) zusammen mit den daran angeordneten Dächrelings (3) an den Karosserieseitenstrukturen reines Kraftfahrzeugs befestigbar ist, **dadurch gekennzeichnet, dass** sich die Dachrelings (3) an den Längstseitenbereichen des Dachmoduls (9) in etwa paralleler Ausrichtung zueinander oberhalb des Dachaußenblechs (10) erstrecken und mit verlängerten Endbereichen (14), die abgewinkelt oder abgebogen sind, Öffnungen im Dachmodul (9) durchsetzen und die einerseits jeweils an vorderen Karosseriesäulen, z.B. A-Säulen (4) und andererseits an hinteren Karosseriesäulen, z.B. D-Säulen (7), befestigbar sind.

2. Fahrzeugdach nach Anspruch 1, **dadurch gekennzeichnet, dass** am Dachmodul (9) Dachrelings (3) angeordnet sind, die jeweils zumindest eine Mittelstütze (8) aufweisen, die am Dachmodul (9) befestigt sind, im Dachmodul (9) vorgesehene Öffnungen durchsetzen und jeweils an einer Karosseriesäule, z.B. B-Säule (5) und/oder C-Säule oder an einem Verstärkungsblech der Fahrzeugkarosserie abstützbar und befestigbar sind.

3. Fahrzeugdach nach Anspruch 1 oder 2, **dadurch gekennzeichnet, dass** die Dachrelings (3) am Dachmodul (9) befestigt sind, und zwar durch eine durch Kleben, Löten, Schweißen, Schrauben oder dgl. gebildete Befestigungsanordnung.

4. Fahrzeugdach nach einem der Ansprüche 1 bis 3, **dadurch gekennzeichnet, dass** die Befestigung der verlängerten Endbereiche (14) der Dachrelings (3) an den Karosseriesäulen jeweils durch eine Klebe-, Löt-, Schweiß-, Schraub- oder dgl. Verbindung erfolgen kann.

## Claims

1. A vehicle roof for passenger cars, combination vehicles and similar motor vehicles, consisting of a prefabricated roof module (9), comprising at least an outer roof panel (10) and a headlining (11), with roof rails (2) fastened thereto, the roof module (9) together with the roof rails (3) located thereon being able to be fastened to the vehicle body side structures of a motor vehicle, **characterised in that** the roof rails (3) extend over the longitudinal side regions of the roof module (9) in an approximately parallel orientation to one another above the outer roof panel (10) and pass with extended end regions (14) which are angled or bent through openings in the roof module (9) and which can each be fastened firstly to front vehicle body pillars, e.g. A-pillars (4), and secondly to rear vehicle body pillars, e.g. D-pillars (7).

2. A vehicle roof according to Claim 1, **characterised in that** roof rails (3) are arranged on the roof module (9), each of which rails have at least one central support (8) which is/are fastened to the roof module (9), pass through openings provided in the roof module (9) and can each be supported on and fastened to a vehicle body pillar, e.g. B-pillar (5) and/or C-pillar, or on/to a reinforcement plate of the vehicle body.

3. A vehicle roof according to Claim 1 or 2, **characterised in that** the roof rails (3) are fastened to the roof module (9), namely by means of a fastening arrangement formed by gluing, soldering, welding, screwing or the like.

4. A vehicle roof according to one of Claims 1 to 3, **characterised in that** the elongated end regions (14) of the roof rails (3) can be fastened to the vehicle body pillars in each case by an adhesive, soldered, welded, screwed or similar join.

## Revendications

1. Toit de véhicule pour voitures particulières, breaks et autres véhicules automobiles, composé d'un module de toit (9) préfabriqué, comprenant au moins une tôle extérieure de toit (10) et un habillage de plafond (11) et présentant des barres de toit (2) fixées dessus, le module de toit (9) pouvant être fixé, conjointement avec les barres de toit (3) disposées dessus, aux structures latérales de la carrosserie d'un véhicule automobile, **caractérisé en ce que** les barres de toit (3) s'étendent sur les zones latérales longitudinales du module de toit (9) en alignement sensiblement parallèle l'une par rapport à l'autre au-dessus de la tôle extérieure de toit (10) et s'étendent dans des ouvertures dans le module de toit (9) par leurs zones terminales prolongées (14), qui sont coudées ou pliées, et qui peuvent être fixées, d'une part, à chaque montant de carrosserie avant, par exemple montants A (4), et d'autre part, à chaque montant de carrosserie arrière, par exemple montants D (7).

2. Toit de véhicule selon la revendication 1, **caractérisé en ce que** des barres de toit (3), qui présentent chacune au moins un support central (8) fixés au module de toit (9), sont disposées sur le module de toit (9), s'étendent dans des ouvertures prévues dans le module de toit (9) et peuvent s'appuyer à ou être fixées à un montant de carrosserie respectif, par exemple montant B (5) et/ou montant C ou à une tôle de renforcement de la carrosserie du véhicule.

3. Toit de véhicule selon l'une quelconque des revendications 1 ou 2, **caractérisé en ce que** les barres de toit (3) sont fixées au module de toit (9), à savoir au moyen d'un aménagement de fixation formé par collage, brasage, soudage, vissage ou semblables.

4. Toit de véhicule selon l'une quelconque des revendications 1 à 3, **caractérisé en ce que** chaque fixation des zones terminales prolongées (14) des barres de toit (3) aux montants de carrosserie peut s'effectuer au moyen d'un assemblage collé, brasé, soudé, vissé ou semblables.
